# EUROPÄISCHE PATENTANMELDUNG

(11) **EP 0 950 601 A2**
(43) Veröffentlichungstag der Anmeldung: **20.10.1999**
(21) Anmeldenummer: 99106965.9
(22) Anmeldetag: 03.04.1999
(51) Int. Cl.: B62D 1/26

(54) **Flurförderfahrzeug, Regalbediengerät, Lagerfahrzeug oder dergleichen**

(30) Priorität: 15.04.1998 DE 19816593
(71) Anmelder: Köttgen Lagertechnik GmbH & Co. KG, 51503 Rösrath (DE)
(72) Erfinder: Hartwig, Markus, Dipl.-Ing., 50969 Köln (DE); Höller, Josef, Dipl.-Ing., 51429 Bergisch Gladbach (DE); Dietrich, Wolfgang, Dipl.-Ing., 50825 Köln (DE)
(74) Vertreter: Nau, Walter, Dipl.-Ing.

(57) **Zusammenfassung**

Flurförderfahrzeug, Regalbediengerät, Lagerfahrzeug oder dergleichen, mit vorzugsweise zwei um vertikale Schwenkachsen drehbare Laufwerke, die jeweils mittels eines Laufrades auf einer im wesentlichen horizontal ausgerichten Lauffläche abgestützt sind und die mittels zumindest je einer vor und hinter dem Laufrad angeordneten, um eine vertikale Achse drehbaren Führungsrolle an seitlichen Führungsschienen geführt sind, wobei die Führungsschienen auch Abzweigungen (Weichen) und Kurven, die auf einer Seite einer geraden Strecke liegen, vorgeben.
Dabei sind die die Abzweigungen und Kurven begrenzenden äußeren Führungsschienen (3) auf einem größeren Radius angeordnet als er ausgehend von der geraden Strecke und dem gewählten Abzweigungs- oder Kurvenradius (gestrichelter Radius) vorgegeben ist.

## Beschreibung

Die Erfindung bezieht sich auf ein Flurförderfahrzeug, Regalbediengerät, Lagerfahrzeug oder dergleichen gemäß dem Oberbegriff des Patentanspruchs 1.

Ein gattungsgemäßes Regalbediengerät ist allgemein bekannt. Es weist eine U-Schiene auf, in der sich ein Laufrad mit einer vor und hinter dem Laufrad angeordneten Führungsrolle abstützt, wobei an den Abzweigungen Weichen vorgesehen sind, die eine schwenkbare Weichenzunge aufweisen. Bei einem Regalbediengerät, das in einer U-Schiene läuft, besteht das Problem, daß in Abzweigungen oder Kurven das Laufrad an den innenliegenden Führungsschienenrand anläuft und dadurch unverhältnismäßig stark verschleißt. Werden die Führungsrollen breiter (größer) als die Laufrolle ausgebildet, läuft das Laufrad zwar nicht an der Führungsschiene an, das Laufrad wird aber von der nachlaufenden Führungsrolle radial nach außen verschoben, was auch zu erhöhtem Verschleiß führt. Wird der Schienenstrang im Abzweigungs- oder Kurvenbereich breiter ausgestaltet, so können Instabilitäten auftreten, da dann die Führungsrollen nicht hinreichenden Kontakt zu den Führungsschienen haben.

Aufgabe der Erfindung ist es, diese Nachteile zu beheben und ein Flurförderfahrzeug, Regalbediengerät, Lagerfahrzeug und dergl. mit den zugeordneten Führungsschienen zu schaffen, das auch in Abzweigungen und Kurven exakt geführt ist und darüberhinaus keinen erhöhten Verschleiß am Laufrad aufweist. Weiterhin sollen auch Abzweigungen befahren werden, ohne daß bewegliche Weichenzungen erforderlich sind.

Die Aufgabe der Erfindung wird dadurch gelöst, daß die die Abzweigungen und Kurven begrenzenden äußeren Führungsschienen auf einem größen Radius angeordnet sind als er ausgehend von der geraden Strecke und dem gewählten Abzweigungs- oder Kurvenradius vorgegeben ist, wobei der Radius um ein solches Maß größer ist, daß das folgende Laufrad ohne Kollision mit den Führungsschienen, insbesondere mit der inneren Führungsschiene, die Abzweigung oder Kurve durchlaufen kann. Dabei schließt die äußere Führungsschiene zweckmäßigerweise mit einem Übergangsradius an die Führungsschiene der geraden Strecke an, um eine Kollision der folgenden Führungsrolle oder der folgenden äußeren Führungsrolle mit der äußeren Führungsschiene zu verhindern, wobei die Anschlußstelle des Übergangsradius in einem Bereich liegt, in dem die gegenüberliegende Führungsschiene noch gerade verläuft. Durch diese Ausgestaltungen der Erfindung läuft das Laufrad auf einem Radius, bei dem es nicht an den Führungsschienen entlangschabt und verschleißt. Das Laufwerk wird nämlich durch den größeren Radius der äußeren Führungsschiene über die vordere Führungsrolle oder die vordere äußere Führungsrolle zu einem späteren Zeitpunkt beim Befahren der Abzweigung oder Kurve verschwenkt, als dies bei einem kleineren Radius der äußeren Führungsschiene der Fall wäre.

Nach einer weiteren Ausgestaltung der Erfindung ist die durch die vertikalen Achsen der Führungsrollen verlaufende Ebene zu der Mittelebene des Laufrades in Richtung der Abzweigungen und Kurven versetzt angeordnet. Dadurch fährt das Laufrad nicht auf der Mitte zwischen den Führungsschienen sondern von den Abzweigungen bzw. Kurven versetzt nach außen, so daß das Laufrad dadurch ebenfalls mit größerem Abstand zu der inneren Führungsschiene verläuft. Vorausgesetzt wird dabei - dies ist aber bei Flurförderfahrzeugen bzw. Regalbediengeräten üblich - daß von der geraden Strecke Abzweigungen bzw. Kurven für einen Einsatzfall nur auf der einen Seite abbiegen. In einem anderen Einsatzfall bzw. in einer anderen Lagerhalle können natürlich die Abzweigungen bzw. Kurven auf der anderen Seite der Geraden liegen. Dann wird natürlich das Laufwerk um 180° verdreht eingesetzt bzw. ummontiert. Statt zwei Führungsrollen können die Laufwerke auch vier quadratisch oder rechteckig um das Laufrad angeordnete Führungsrollen aufweisen, wobei die durch die Längsmittelebene der Führungsrollen verlaufende Ebene dann zu der Mittelebene des Laufrades in Richtung der Abzweigungen und Kurven versetzt angeordnet ist. Um eine exakte Führung des Laufwerkes sicherzustellen, ist die in Abzweigungen und Kurven innen angeordnete Führungsschiene auf einem größeren Radius angeordnet, als er ausgehend von der geraden und dem gewählten Abzweigungs- oder Kurvenradius vorgegeben ist, wobei der Radius um ein solches Maß größer ist, daß die Führungsrollen oder die der inneren Führungsschiene zugewandten Führungsrollen nur mit dem erforderlichen Spiel zur inneren Führungsschiene angeordnet sind. Dadurch erfolgt eine exakte Führung der Laufwerke in Abzweigungen oder Kurven ohne zu großes Spiel zwischen den Führungsschienen und den Führungsrollen zu haben und ohne daß die Laufräder mit den Führungsschienen kollidieren.

In vorteilhafter Weise ist im Bereich der Schwenkachse zwischen Regalbediengerät, Lagerfahrzeug oder dergleichen bzw. dessen Rahmen und den Laufwerken ein Halte- oder Drehmoment aufbringbar, das zweckmäßigerweise elektrisch (Magnete) oder hydraulisch (Hydromotor) erzeugt wird. Durch geeignete Druckmittelzufuhr kann der Hydromotor direkt oder über Zwischenzahnräder das Laufwerk verdrehen und dabei dieses in Abzweigungen bzw im Weichenbereich direkt lenken bzw. in Kurven das Verschwenken erleichtern. Durch Sperren bzw. Drosseln der Hydraulikleitungen zum Hydromotor kann dieser das Schwenken des Laufwerkes bremsen bzw. verhindern, so daß das Flurförderfahrzeug zum Beispiel im Weichenbereich geradeaus fährt. Dadurch ist es auch möglich, die Abzweigungen ohne bewegliche Weichenzungen zu gestalten und die äußere Führungsschiene in Abzweigungen in Verlängerung des Verlaufs der geraden Strecke mit einer Ausnehmung zu versehen, an die gerade verlaufenden Führungsschienen anschließen. Das heißt, die Abzweigungen bzw. Weichen können gerade durchfahren oder auch als Abzweigungen benutzt werden, wobei dann ein aktives Lenken des Laufwerkes zweckmäßig ist. Die Laufräder des Flurförderfahrzeuges, Regalbediengeräts oder dergl. können auf einem beliebigen ebenen Untergrund laufen, wobei nur die seitlichen Führungsschienen vorgesehen sein müssen. Die Laufflächen und die Führungsschienen können aber auch zu einem U-förmigen Schienenstrang ausgebildet sein, der mehrstückig oder einstückig hergestellt sein kann.

Zur weiteren Erläuterung der Erfindung wird auf die Zeichnungen verwiesen, in denen Ausführungsbeispiele der Erfindung vereinfacht dargestellt sind.
Es zeigen:
- Figur 1:: einen Schienenstrang mit einer Abzweigung, in die an verschiedenen Stellen skizzierte Laufwerke eingezeichnet sind,
- Figur 2:: einen Schienenstrang mit einer Kurve und ebenfalls an mehreren Stellen eingezeichnete Laufwerk in skizzierter Darstellung und
- Figur 3:: ein skizziertes Laufwerk entsprechend der Ansicht der Pfeile III in den Figuren 1 und 2.

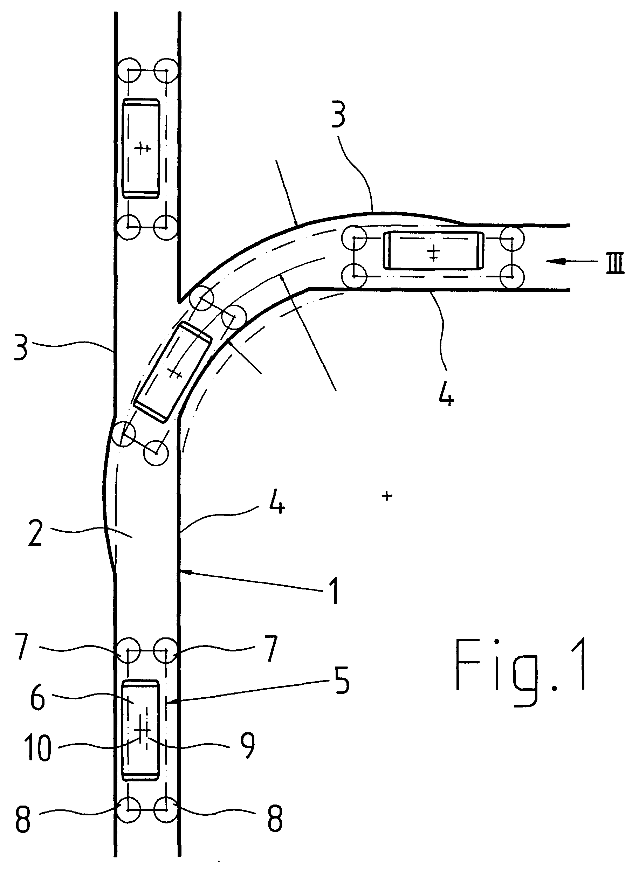

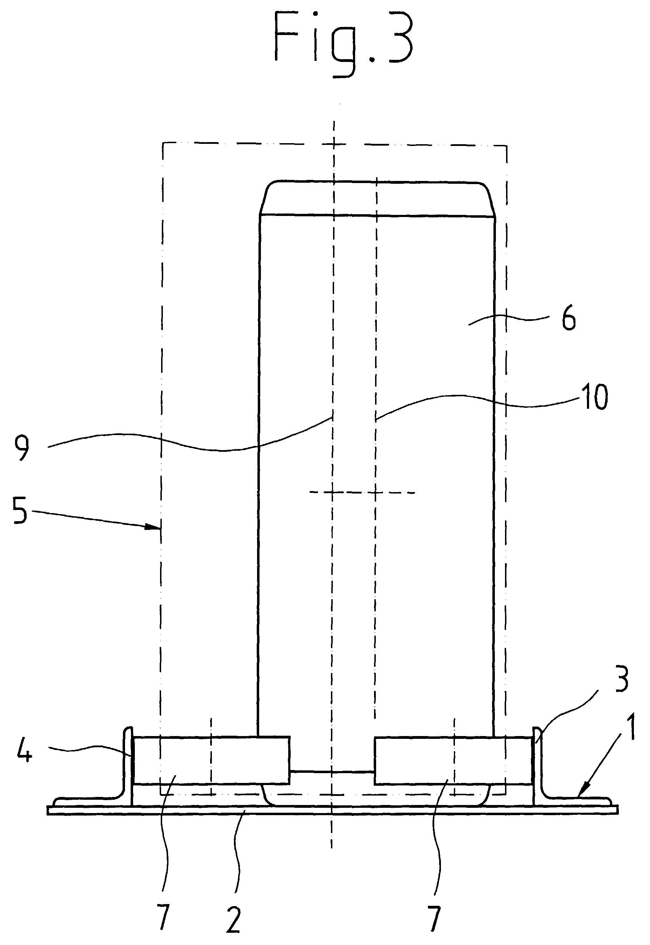

In den Figuren 1 bis 3 ist, soweit im einzelnen dargestellt, mit 1 ein Schienenstrang bezeichnet, der eine Lauffläche 2 und Führungsschienen 3 und 4 aufweist. In Kurven bzw. Abzweigungen ist die Führungsschiene 3 als äußere und die Führungsschiene 4 als innere Führungsschiene ausgebildet. Mit 5 sind skizziert Laufwerke dargestellt, die je ein Laufrad 6 und Führungsrollen 7 und 8 aufweisen. Mit 9 sind Längsmittelebenen zu den vier Führungsrollen 7 und 8 bezeichnet, die gegenüber der Mittelebene der Laufräder 6 versetzt angeordnet sind und zwar so, daß die Längsmittelebene zu den Führungsrollen gegenüber der Mittelebene der Laufräder 6 in Richtung der Abzweigungen bzw. Kurven versetzt sind. Im Ausführungsbeispiel sind dies ca. 30 mm.

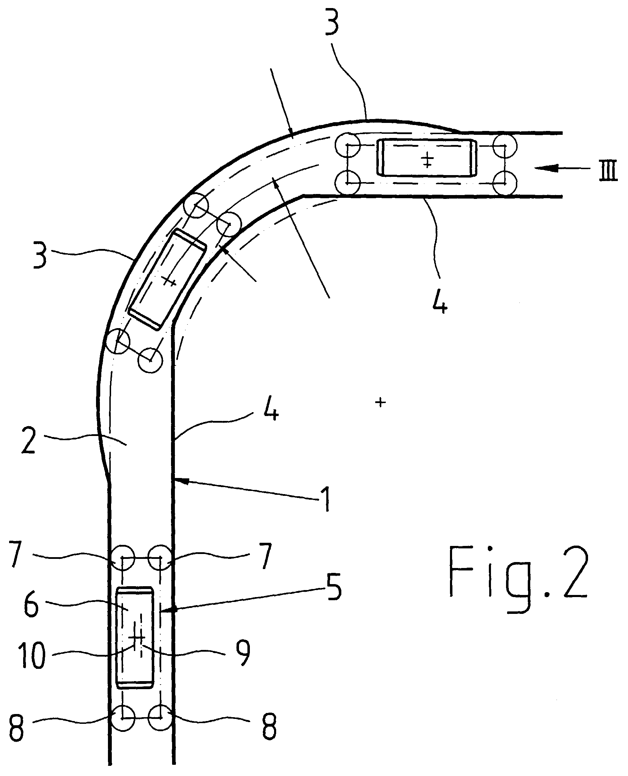

Wie weiter den Figuren 1 und 2 zu entnehmen ist, sind in Abzweigungen und Kurven die äußeren Führungsschienen 3 auf einem größeren Radius angeordnet, als er ausgehend von der geraden Strecke und unter Zugrundelegung der Abzweigungs- oder Kurvenradien vorgegeben wäre, in den Fig. 1 u. 2 gestrichelt gezeichnet. Der Radius der äußeren Führungsschiene ist dabei so groß gewählt, daß die Laufräder mit ausreichendem Abstand zu der inneren Führungsschiene verlaufen, wobei ausgehend von dem Radius der äußeren Führungsschiene 3 und dem Versatz der Längsmittelebene der Führungsrollen und der Mittelebene der Laufräder die innere Führungsschiene ebenfalls einen größeren Radius aufweist als er ausgehend von der geraden und dem gewählten Abzweigungs- oder Kurvenradius vorgegeben wäre, ebenfalls in den Fig. 1 u. 2 gestrichelt dargestellt. Bei einem Abzweigungs- oder Kurvenradius von ca. 1000 mm gemäß dem Ausführungsbeispiel ist der Radius der äußeren Führungschiene 3 ca. 1148 mm und der der inneren Führungsschiene 4 ca. 894 mm.
Durch diese Ausgestaltung ist insgesamt eine gute Führung der Laufwerke 5 und ein geringer Verschleiß der Laufräder 6 gegeben.

## Patentansprüche

1. Flurförderfahrzeug, Regalbediengerät, Lagerfahrzeug oder dergleichen, mit vorzugsweise zwei um vertikale Schwenkachsen drehbare Laufwerke, die jeweils mittels eines Laufrades auf einer im wesentlichen horizontal ausgerichten Lauffläche abgestützt sind und die mittels zumindest je einer vor und hinter dem Laufrad angeordneten, um eine vertikale Achse drehbaren Führungsrolle an seitlichen Führungsschienen geführt sind, wobei die Führungsschienen auch Abzweigungen (Weichen) und Kurven, die auf einer Seite einer geraden Strecke liegen, vorgeben,
***dadurch gekennzeichnet, daß*** die die Abzweigungen und Kurven begrenzenden äußeren Führungsschienen (3) auf einem größen Radius angeordnet sind als er ausgehend von der geraden Strecke und dem gewählten Abzweigungs- oder Kurvenradius (gestrichelter Radius) vorgegeben ist, wobei der Radius um ein solches Maß größer ist, daß das folgende Laufrad (6) ohne Kollision mit den Führungsschienen (3 u. 4) die Abzweigung oder Kurve durchlaufen kann.

2. Flurförderfahrzeug nach Anspruch 1,
***dadurch gekennzeichnet, daß*** die äußere Führungsschiene (3) mit Übergangsradien an die Führungsschienen (3) der geraden Strecken anschließt.

3. Flurförderfahrzeug nach Anspruch 2,
***dadurch gekennzeichnet, daß*** die Anschlußstelle des Übergangsradius in einem Bereich liegt, in dem die gegenüberliegende Führungsschiene (4) gerade verläuft.

4. Flurförderfahrzeug nach einem der Ansprüche 1 bis 3,
***dadurch gekennzeichnet, daß*** die durch die vertikalen Achsen der Führungsrollen verlaufende Ebene zu der Mittelebene (10) des Laufrades (6) in Richtung der Abzweigungen und Kurven versetzt angeordnet ist.

5. Flurförderfahrzeug nach einem der vorhergehenden Ansprüche,
***dadurch gekennzeichnet, daß*** bei vier quadratisch oder rechteckig um das Laufrad (6) angeordneten Führungsrollen (7 u. 8), die durch die Längsmittelebene (9) der Führungsrollen (7 u. 8) verlaufende Ebene zu der Mittelebene (10) des Laufrades (6) in Richtung der Abzweigungen und Kurven versetzt angeordnet ist.

6. Flurförderfahrzeug nach einem der vorhergehenden Ansprüche,
***dadurch gekennzeichnet, daß*** die in Abzweigungen und Kurven innen angeordnete Führungsschiene (4) auf einem größeren Radius angeordnet ist als er ausgehend von der Geraden und dem gewählten Abzweigungs- oder Kurvenradius (gestrichelter Radius) vorgegeben ist, wobei der Radius um ein solches Maß größer ist, daß die Führungsrollen oder die der inneren Führungsschiene (4) zugewandten Führungsrollen (7 u. 8) nur mit dem erforderlichen Spiel zur inneren Führungsschiene (4) angeordnet sind.

7. Flurförderfahrzeug nach einem der vorhergehenden Ansprüche,
***dadurch gekennzeichnet, daß*** im Bereich der Schwenkachse zwischen Flurförderfahrzeug, Regalbediengerät, Lagerfahrzeug oder dergleichen und den Laufwerken (5) ein Halte- oder Drehmoment aufbringbar ist.

8. Flurförderfahrzeug nach Anspruch 7,
***dadurch gekennzeichnet, daß*** das Halte- oder Drehmoment durch Elektromagnete, eine hydraulische Bremse oder einen hydraulischen Motor, der auch als Bremse feststellbar ist, erzeugt wird.

9. Flurförderfahrzeug nach einem der vorhergehenden Ansprüche,
***dadurch gekennzeichnet, daß*** in Abzweigungen die äußere Führungsschiene (3) in Verlängerung des Verlaufs der geraden Strecke eine Ausnehmung aufweist, an die gerade verlaufende Führungsschienen (3 u. 4) anschließen.

10. Flurförderfahrzeug nach einem der vorhergehenden Ansprüche,
***dadurch gekennzeichnet, daß*** die Laufflächen (2) und die Führungsschienen (3 u. 4) zu einem U-förmigen Schienenstrang (1) ausgebildet sind.
